# EUROPÄISCHE PATENTSCHRIFT

(11) **EP 1 204 528 B1**
(45) Veröffentlichungstag und Bekanntmachung des Hinweises auf die Patenterteilung: **23.07.2003**
(21) Anmeldenummer: 00954569.0
(22) Anmeldetag: 26.07.2000
(51) Int. Cl.: B29C 67/00, G06T 17/00, B23K 26/00

(54) **VORRICHTUNG UND VERFAHREN ZUM HERSTELLEN EINES DREIDIMENSIONALEN OBJEKTS**
DEVICE AND METHOD FOR PRODUCING A THREE-DIMENSIONAL OBJECT
DISPOSITIF ET PROCEDE PERMETTANT DE PRODUIRE UN OBJET A TROIS DIMENSIONS

(30) Priorität: 20.08.1999 DE 19939617
(43) Veröffentlichungstag der Anmeldung: 15.05.2002
(73) Patentinhaber: Deltamed Medizinprodukte GmbH, 61169 Friedberg (DE)
(72) Erfinder: ZIMMERMANN, Michael, D-65931 Frankfurt (DE)
(74) Vertreter: Prüfer, Lutz H., Dipl.-Phys.
(86) Internationale Anmeldenummer: EP0007209
(87) Internationale Veröffentlichungsnummer: WO01014125

(56) Entgegenhaltungen:
- WO-A-99/26083
- DE-C- 4 306 797
- DE-C- 19 645 976
- FR-A- 2 692 053
- US-A- 5 017 944
- US-A- 5 454 069
- PATENT ABSTRACTS OF JAPAN vol. 015, no. 513 (M-1196), 26. Dezember 1991 (1991-12-26) & JP 03 227221 A (SANYO ELECTRIC CO LTD), 8. Oktober 1991 (1991-10-08)

## Beschreibung

Die Erfindung betrifft eine Vorrichtung und ein Verfahren zum Herstellen eines dreidimensionalen Objekts nach dem Oberbegriff des Patentanspruches 1 bzw. 8.

Eine Vorrichtung zum Herstellen eines dreidimensionalen Objekts mittels Stereolithographie ist beispielsweise aus der JP-A-61-114818 bekannt. Bei der bekannten Vorrichtung wird ein UV-Laser zum Aushärten eines lichtaushärtbaren Harzes verwendet, wobei der Laserstrahl mittels eines ablenkbaren Spiegelsystems über eine auszuhärtende Schicht des Harzes gescannt wird. Die bekannte Vorrichtung ist jedoch hinsichtlich der bei dem Objekt erzielten Strukturauflösung beschränkt. Objekte mit Abmessungen im Mikrometerbereich sind nicht oder nur mit beschränkter Qualität herzustellen.

Aus der DE 43 06 797 C1 und der DE 196 45 976 C1 ist jeweils eine Vorrichtung mit einem Laser und einem Bildschirm zum Abbilden von Bildern bekannt. Bei der bekannten Vorrichtung ist es möglich, Bilder mittels eines Laserstrahls auf einem Bildschirm zu erzeugen, wobei der Laserstrahl ähnlich wie ein Elektronenstrahl einer Fernsehbildröhre über den Bildschirm gerastert wird. Die Bilder werden durch Ansteuern von drei Lasern in den Grundfarben rot, grün und blau derart erzeugt, daß jeder Bildpunkt (Pixel) des auf dem Bildschirm darzustellenden Bildes aus einer Mischung der Laserstrahlen der drei Laser erzeugt wird, wobei die Mischung entsprechend der gewünschten Farbe und Helligkeit vorgenommen wird. Diese bekannte Vorrichtung wird als Laserprojektor bezeichnet und die ihr zugrundeliegende Technik ist auch als Laser-TV bzw. Laserprojektionstechnik bekannt.

Die US 5,454,069 betrifft eine Vorrichtung gemäß dem Oberbegriff des Anspruchs 1 sowie ein Stereolithographieverfahren, bei dem die Schichtdaten für das Objekt aus Computertomographiebildern und ähnlichem erzeugt werden. Die Belichtung erfolgt dann mittels eines entsprechend zu den Bilddaten abgelenkten Laserstrahls. Die Belichtung erfolgt mittels Vektoren (X and Y cross hatch) oder Bordervektoren, die den Rand des Objektes beschreiben. Die Ablenkung erfolgt in Entsprechung zu den Pixeln des aus dem Computertomographiebild oder ähnlichem erzeugten Schichtbilds.

Die FR-A-2 692 053 betrifft das Verfahren der Stereolithographie unter Verwendung einer aktiven Maske. Bei der aktiven Maske wird der transparente Teil die Lichtstrahlen zur Verfestigung der Flüssigkeit hindurchgelassen und der andere Teil die Lichtstrahlen abgehalten, wobei die Maske durch ein elektronisches System angesteuert wird, um ihren Zustand zu ändern. Als ein Beispiel einer Maske wird neben einer Flüssigkristallanzeige auch ein Videobildschirm, der emittiert, angegeben.

Der Abstract Vol. 015, No. 513 (M-1196) zu JP-A-03 227221 betrifft die Verwendung eines "picture display device" zum Bestrahlen der Oberfläche eines auszuhärtenden Harzes in einer Stereolithographieeinrichtung.

Aufgabe der Erfindung ist es, eine Vorrichtung und ein Verfahren zum Herstellen eines dreidimensionalen Objekts bereitzustellen, welche es erlauben, Objekte mit verbesserter Strukturauflösung, insbesondere Objekte mit Abmessungen im Mikrometerbereich zu erzeugen.

Diese Aufgabe wird gelöst durch eine Vorrichtung gemäß Patentanspruch 1 bzw. ein Verfahren gemäß Patentanspruch 8.

Weiterbildungen der Erfindung sind in den Unteransprüchen angegeben.

Weitere Merkmale und Zweckmäßigkeiten ergeben sich aus der Beschreibung von Ausführungsbeispielen anhand der Figuren.

Von den Figuren zeigen:
- Fig. 1: eine schematische Querschnittsansicht der Vorrichtung gemäß einer Ausführurigsform, und
- Fig. 2: eine schematische Darstellung eines zu bildenden Objekts.

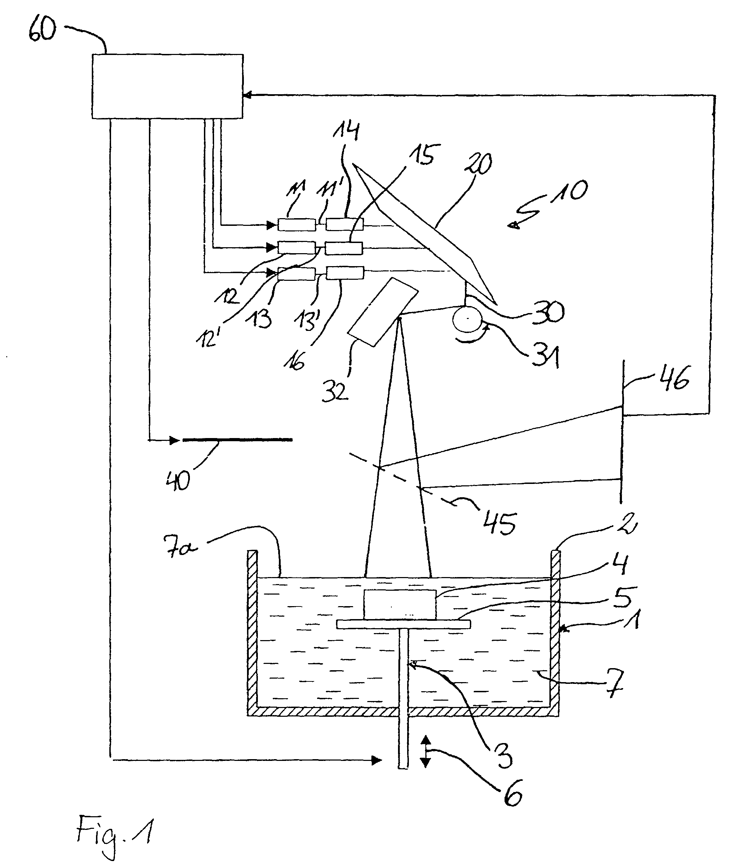

Wie aus Figur 1 ersichtlich ist, weist die Vorrichtung einen an seiner Oberseite offenen Behälter 1 mit einem oberen Rand 2 auf. In dem Behälter ist ein Träger 3 zum Tragen eines zu bildenden Objektes 4 mit einer im wesentlichen ebenen und horizontal ausgerichteten Bauplattform 5 angeordnet, die mittels einer schematisch angedeuteten Höheneinstellvorrichtung 6 in dem Behälter 1 auf und ab verschoben und positioniert werden kann.
Der gesamte Behälter 1 ist bis zu einem Niveau bzw. einer Oberfläche 7a unterhalb des oberen Randes 2 mit einem im sichtbaren Licht aushärtbarem flüssigen Kunststoff 7 gefüllt.

Oberhalb des Behälters 1 ist eine Belichtungseinrichtung 10 angeordnet. Die Belichtungseinrichtung weist drei Laser 11, 12, 13 auf, die jeweils Licht der Wellenlänge der Primärfarben rot, grün, blau zum Erzeugen der Bildpunkte eines Videobildes aussenden. Die von den Lasern 11, 12, 13 ausgehenden Lichtbündel 11', 12', 13' sind in dem hier beschriebenen Ausführungsbeispiel durch Modulatoren 14, 15, 16, die im Lichtweg der Lichtbündel 11', 12', 13' angeordnet sind, intensitätsmodulierbar. Die Modulatoren sind beispielsweise aus DKDP-Kristallen gebildet, mit denen die Polarisationsrichtung der Lichtbündel 11', 12', 13' geändert wird, so daß die Lichtbündel durch ein nachfolgendes Polarisationsfilter in Abhängigkeit einer Ansteuerspannung intensitätsmoduliert werden. Die Lichtbündel werden durch ein Spiegelsystem 20 zu einem Gesamtlichtbündel 30 vereinigt, welches sich durch das weitere System fortpflanzt.

Das Gesamtlichtbündel 30 wird durch eine aus einem drehbaren Polygonspiegel 31 und einem Schwenkspiegel 32 bestehende Ablenkeinrichtung zeilen- und bildmäßig auf die Oberfläche 7a des Kunststoffes 7 in dem Behälter 1 abgelenkt. Die Rotationsgeschwindigkeit des Polygonspiegels 31 bestimmt die Ablenkgeschwindigkeit des Gesamtlichtbündels in einer horizontalen- bzw. Zeilenrichtung, während die Frequenz, mit der der Schwenkspiegel 32 geschwenkt wird, die Ablenkgeschwindigkeit des Gesamtlichtbündels in einer vertikalen Richtung, also die Geschwindigkeit mit der die Zeilen aufeinanderfolgen, bestimmt. In dem Strahlengang des Gesamtlichtbündels 30 kann eine Aufweitungsoptik vorgesehen sein, um bei kleinen Ablenkwinkeln trotzdem ein großes Bild auf der Oberfläche 7a des Kunststoffes möglich zu machen. Alternativ kann auch eine Verkleinerungsoptik vorgesehen sein.

Es ist ferner eine Abschattungseinrichtung 40 vorgesehen, die in den Strahlengang des Gesamtuchtbündels 30 nach Ablenkung. durch die Spiegel mittels einer schematisch angedeuteten Schwenkvorrichtung hinein- und wieder herausschwenkbar.

In dem Strahlengang ist ferner ein halbdurchlässiger Spiegel 45 unter 45° zur optischen Achse angeordnet, wodurch ein Teil der Lichtstrahlen des Abbildungsstrahlenganges ausgeblendet wird. Es ist ferner ein Detektor 46 vorgesehen, mit dem das über den halbdurchlässigen Spiegel 45 ausgeblendete Licht aufgefangen wird. Der Detektor ist beispielsweise als Digitalkamera ausgebildet.

Die gesamte Belichtungseinrichtung 10 ist über einen nicht dargestellten Antrieb in vertikaler Richtung verschiebbar, so daß der Abstand relativ zu dem Behälter einstellbar ist.

Es ist ferner eine Steuerung 60 vorgesehen zum voneinander unabhängigen oder zum koordinierten Steuern der Höheneinstellvorrichtung 6, der Belichtungseinrichtung 10 und der Blende 40. Die Steuerung 60 ist derart ausgebildet, daß sie in Abhängigkeit von Videodaten, die jeweils das in einer Schicht auf der Oberfläche 7a des Kunststoffes zu erzeugende, aus Bildpunkten (Pixeln) zusammengesetzte Bild kennzeichnen und die den Querschnittsdaten des Objekts in der jeweiligen Schicht entsprechen, die Belichtungseinrichtung 10 derart ansteuert, daß das über die Modulatoren 14, 15, 16 bildpunkt- bzw. pixelweise intensitätsmodulierte Gesamtlichtbündel 30 zeilenweise mit einer Frequenz, die den üblichen Videonormen entspricht, über die Kunststoffoberfläche 7a abgelenkt wird und dort ein für das menschliche Auge stehendes Bild erzeugt, welches dem Querschnitt des Objekts in der jeweiligen Schicht entspricht. Ferner ist die Steuerung 60 so ausgebildet, daß die Bauplattform 5 schrittweise um das einer Schichtdicke entsprechende Maß absenkbar ist und daß die Blende 40 in den Strahlengang eingeschwenkt wird, wenn keine Belichtung der Oberfläche des Kunststoffes stattfinden soll, bzw. aus dem Strahlengang herausgeschwenkt wird, bevor die Belichtung einer Schicht beginnt.

Im Betrieb werden zuerst aus vorgegebenen Objektdaten, beispielsweise CAD-Daten, in bekannter Weise Schichtdaten für den Querschnitt des Objekts in jeder Schicht erzeugt und diese Schichtdaten in die oben genannten Videodaten zur Ansteuerung der Belichtungseinrichtung 10 transformiert. Dann wird über die Höheneinstellvorrichtung 6 der Träger 3 derart in dem mit flüssigem Kunststoff 7 gefüllten Behälter verschoben, daß sich die Oberfläche der Bauplattform 5 um das der gewünschten Schichtdicke entsprechende Maß unterhalb der Oberfläche 7a des Kunststoffes befindet.

Anschließend erfolgt die Belichtung der ersten Schicht. Entsprechend den Videodaten werden die Modulatoren 14, 15, 16 für die einzelnen Laser 11, 12, 13 bildpunktweise derart angesteuert, daß das Gesamtlichtbündel 30 an jedem Bildpunkt eine Intensität, die durch den Bildinhalt vorgegeben ist, aufweist. Das Gesamt lichtbündel 30 wird dann zeilenweise mit der beispielsweise beim Fernseher üblichen Videofrequenz auf die Oberfläche 7a abgelenkt, um sequentiell einzelne Bildpunkte des zu erzeugenden Videobildes auf der Oberfläche 7a zu beleuchten, wobei beim Auftreffen des Laserstrahls der Kunststoff aushärtet. Die Frequenz, mit der das Gesamtlichtbündel über die Oberfläche 7a geführt wird, ist dabei so groß, daß sich für das Auge ein stehendes Bild ergibt. Die Belichtung einer Schicht erfolgt so lange, bis die Schicht an den im Objekt entsprechenden Stellen ausgehärtet ist. Die erforderliche Belichtungszeit für eine Schicht ist sehr kurz, im allgemeinen kleiner als 5 Sekunden. Es ist sogar möglich, eine Schicht mit einer Sekunde Belichtungszeit auszuhärten. Durch die aufgrund des stehenden Bildes, das der Laserstrahl auf der zu belichteten Fläche erzeugt, nahezu gleichmäßig flächenhafte Belichtung mit großer Lichtenergie ist auch eine Belichtung und Verfestigung großer Flächen in kurzer Zeit möglich.

Das Intensitätsprofil einer Schicht wird nach Ausblenden durch den halbdurchlässigen Spiegel 45 über den Detektor 46 erfaßt und zur Steuerung der Belichtung der darauf folgenden Schicht oder nachfolgender Objekte verwendet. Anhand des gemessenen Intensitätsprofils kann das tatsächlich auf die Schicht auftreffende Intensitätsprofil ermittelt werden und anschließend entweder die Belichtungszeit oder die Lichtintensität gesteuert werden. Damit läßt sich die Verfestigungstiefe auf einfache Weise steuern.

Nach der Belichtung einer Schicht wird die Blende 40 in den Strahlengang geschwenkt, um zu verhindern, daß während der Einstellung der nächsten Schicht Licht auf das Kunststoffmaterial in dem Behälter fällt und dieses an nicht gewünschten Stellen verfestigt wird. Anschließend wird die Bauplattform 5 um das einer Schichtdicke entsprechende Maß abgesenkt, so daß sich oberhalb der zuletzt verfestigten Schicht eine neue flüssige Kunststoffschicht bildet.

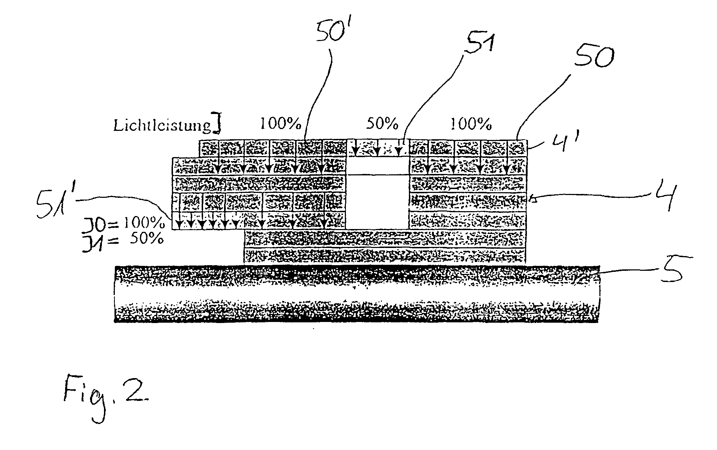

Durch die Farblaser in den drei Grundfarben und die Möglichkeit, diese in praktisch jedem beliebigen Mischungsverhältnis zu dem Gesamtlichtbündel 30 zusammenzuführen, kann auch eine Belichtung durch weißes Licht und durch eine Intensitätsmodulation des weißen Lichts eine Graustufenbelichtung durchgeführt werden. Das bedeutet, daß mittels Variation der Intensität des Gesamtlichtbündels die Verfestigungstiefe gesteuert werden kann. Die Verfestigungstiefe kann nicht nur von Schicht zu Schicht variiert werden, sondern auch innerhalb innerhalb von zu belichtenden Bereichen einer Schicht. Ein Bauprogramm für das zu bildende Objekt erzeugt zu den Schichtdaten des Querschnitts des zu bildenden Objekts in jeder Schicht eine Zusatzinformation, in der, wie in Fig. 2 ersichtlich ist, angegeben ist, welche Bereiche 50, 50' der zu verfestigenden Schicht mit darunterliegenden verfestigten Bereichen einer vorherigen Schicht zu verbinden sind und welche Bereiche 51, 51' über nicht verfestigten Bereichen zu bilden sind. Fig. 2 zeigt eine schematische Darstellung eines im Aufbau befindlichen Objektes 4, bei dem in der obersten verfestigten Schicht 4' der Bereich 51 einen darunterliegenden Hohlraum des zu bildenden Objekts überbrückt, der während des Aufbaus unverfestigtes Material enthält und bei dem der Bereich 51' den Beginn eines überhängenden bzw. auskragenden Teils des zu bildenden Objekts darstellt. Anhand der Zusatzinformation in den Schichtdaten und damit in dem zu projizierenden Videobild werden die Intensitätsmodulatoren der Belichtungseinrichtung derart angesteuert, daß Bereiche 50, 50', die sich über bereits verfestigten Bereichen befinden, mit einer Lichtintensität I0 belichtet werden, die ausreicht, daß das Gesamtlichtbündel diesen Bereich der Schicht durchdringt und ihn mit dem darunterliegenden Bereich bei der Verfestigung verbindet. Die Bereiche 51, 51' werden mit einer Intensität I1 belichtet, die im Vergleich zu 10 um bis zu 50% reduziert ist. Damit wird gewährleistet, daß der zu verfestigende Bereich 51, 51' nur bis zur Tiefe, die einer Schichtdicke entspricht, ausgehärtet wird. Es lassen sich durch die Graustufenbelichtung aber auch beliebige andere Intensitäten auf einfache Weise einstellen. Auch bei der Graustufenbelichtung kann eine Messung des Intensitätsprofils wie oben beschrieben durchgeführt werden.

Mittels der Auflösung der Videodaten läßt sich ferner die Strukturauflösung des herzustellenden Objekts steuern. Die Auflösung kann softwaremäßig dadurch gesteuert werden, daß die Anzahl der Pixel in Zeilen- bzw. Spaltenrichtung in dem Videobild eingestellt wird.

In einer alternativen Ausführungsform weist die Vorrichtung zusätzlich zu den drei Lasern, die im sichtbaren Bereich in den drei Grundfarben emittieren, einen UV-Laser auf und eine Umschalteinrichtung, mittels der zwischen einem Modus der Belichtung durch den UV-Laser oder einem Modus der Belichtung durch das Gesamtlichtbündel der drei Laser, die im Sichtbaren emittieren, umgeschaltet werden kann. Eine derartige Umschalteinrichtung kann im einfachsten Fall aus einem Abschatter bestehen, der den nicht benötigten Strahl abschattet. Die Vorrichtung weist so den Vorteil auf, daß sie variabel für verschiedene, auf jeweils unterschiedliche Teile des elektromagnetischen Spektrums empfindliche Materialien zum Bilden des Objekts verwendbar ist.

In einer weiteren alternativen Ausführungsform weist die Vorrichtung eine an dem Behälter 1 gelagerte und in die Oberfläche des Bades aus flüssigem Kunststoffmaterial 7 eintauchende, horizontal ausgerichtete Platte auf, die aus einem Material gebildet ist, das für die zur Verfestigung verwendete Strahlung durchlässig ist. Durch die Verwendung der Platte ist gewährleistet, daß zwischen der Oberfläche der Bauplattform 5 bzw. einer zuletzt verfestigten Schicht eine gleichmäßige Schicht an unverfestigtem Material beim Absenken des Trägers 3 gebildet wird.

Die Vorrichtung und das Verfahren sind nicht auf die beschriebenen Ausführungsformen beschränkt. Als Strahlungsquelle, die einen gerichteten Energiestrahl abgibt, kann auch ein einzelner intensitätsmodulierbarer Laser, der nicht notwendigerweise ein UV-Laser sein muß, beispielsweise in Form eines Gaslasers oder eines Festkörperlasers verwendet werden. Das verwendete Material wird dann in Abhängigkeit von der verwendeten Energiequelle und den gewünschten Objekteigenschaften gewählt. Wichtig ist, daß die Ablenkung derart erfolgt, daß ein stehendes Bild des Objektquerschnitts auf die Schicht projiziert wird.

Die Vorrichtung und das Verfahren haben den Vorteil, daß die Belichtungseinrichtung eine sehr hohe Lichtausbeute hat, der Kontrast größer als 1000:1 ist und die Tiefenschärfe fast unbegrenzt ist. Ein optisches Skalieren ist völlig problemlos und die Auflösung ist für Objekte im Millimeterbereich oder im Bereich von mehreren Zentimetern dieselbe. Die Auflösung wird nur noch durch die Lichtbeugung begrenzt.

## Patentansprüche

1. Vorrichtung zum Herstellen eines dreidimensionalen Objekts durch aufeinanderfolgendes Verfestigen von Schichten eines mittels elektromagnetischer Strahlung oder Teilchenstrahlang verfestigbaren Materiales an den dem Querschnitt des Objekts (4) in der jeweiligen Schicht entsprechenden Stellen mit einer Belichtungseinrichtung (11, 12, 13) zum Erzeugen eines gerichteten Strahls der elektromagnetischen Strahlung oder der Teilchenstrahlung, der auf eine zu bestrahlende Fläche der jeweiligen Schicht auftrifft, wobei die Belichtungseinrichtung wenigstens einen Laser (11, 12, 13) umfaßt
und einer Ablenkeinrichtung (31, 32) zum Ablenken des gerichteten Strahls der elektromagnetischen Strahlung oder der Teilchenstrahlung an den dem Objekt entsprechenden Stellen in jeder Schicht in einem Rastermodus,
**dadurch gekennzeichnet, daß**
die Ablenkeinrichtung (31, 32) so ausgebildet ist, daß sie in Abhängigkeit von videodaten, die einem Bild des Querschnitts des Objekts in der jeweiligen Schicht entsprechen, den gerichteten Strahl derart ablenkt, daß auf der zu bestrahlenden Fläche durch den Strahl ein für ein menschliches Auge stehendes Bild des Querschnitts des Objekts projiziert wird.

2. Vorrichtung nach Anspruch 1, **dadurch gekennzeichnet, daß** die Ablenkeinrichtung (31, 32) so ausgebildet ist, daß der Strahl in einem Rastermodus mit einer Zeilenfrequenz entsprechend einer üblichen Videonorm abgelenkt wird.

3. Vorrichtung nach Anspruch 1, **dadurch gekennzeichnet, daß** der Laser ein UV-Laser ist.

4. Vorrichtung nach Anspruch 1 oder 2, **dadurch gekennzeichnet, daß** die Belichtungseinrichtung wenigstens drei intensitätsmodulierbare Laser (11, 12, 13) umfaßt, die Einzelstrahlen (11', 12', 13') im sichtbaren Spektrum der elektromagnetischen Strahlung in den Farben rot, grün bzw. blau emittieren, und daß eine Einrichtung zum Erzeugen eines Gesamtstrahls (30) aus den Einzelstrahlen vorgesehen ist.

5. Vorrichtung nach Anspruch 3, **dadurch gekennzeichnet, daß** die Belichtungseinrichtung zusätzlich einen UV-Laser umfaßt und daß eine Umschalteinrichtung vorgesehen ist zum Umschalten der Belichtungseinrichtung von einem Betrieb, in dem die Bestrahlung mit dem UV-Laser erfolgt und einem Betrieb, in dem die Bestrahlung mit dem Gesamtstrahl aus den Einzelstrahlen erfolgt.

6. Vorrichtung nach einem der Ansprüche 1 bis 5, **gekennzeichnet durch** einen Behälter (1) zur Aufnahme eines mittels elektromagnetischer Strahlung verfestigbaren Materials (7) und einer in dem Behälter höhenverfahrbar angeordneten Bauplattform (5) zur Aufnahme des zu bildenden objekts.

7. Vorrichtung nach einem der Ansprüche 1 bis 6, **dadurch gekennzeichnet, daß** das Bild aus Bildpunkten zusammengesetzt ist und daß eine Einrichtung (60) zur bildpunktweisen Steuerung der Intensität des Strahles vorgesehen ist.

8. Verfahren zum Herstellen eines dreidimensionalen Objekts durch schichtweises Verfestigen eines unter Einwirkung elektromagnetischer Strahlung oder Teilchenstrahlung verfestigbaren Materials (7) an den dem Querschnitt des Objekts (4) in der Schicht entsprechenden Stellen, wobei das Material (7) in jeder Schicht an den dem Querschnitt des Objekts (4) entsprechenden Stellen durch Bestrahlen mit einem gerichteten Strahl (30) der elektromagnetischen oder der Teilchenstrahlung erfolgt, wobei der Strahl in einem Rastermodus über die Schicht abgelenkt wird, als Strahl ein Laserstrahl verwendet wird und als Material ein Iichtaushärtbarer Kunststoff verwendet wird
**dadurch gekennzeichnet, daß** in Abhängigkeit von Videodaten, die einem Bild des Querschnitts des Objekts in der jeweiligen Schicht entsprechen, der gerichtete Strahl derart abgelenkt wird, daß auf der zu bestrahlenden Fläche durch den Strahl ein für ein menschliches Auge stehendes Bild des Querschnitts des Objekts projiziert wird.

9. Verfahren nach Anspruch 8, **dadurch gekennzeichnet, daß** der Strahl in einem Rastermodus mit einer Zeilenfrequenz entsprechend einer üblichen Videonorm abgelenkt wird.

10. Verfahren nach Anspruch 8, **dadurch gekennzeichnet, daß** ein UV-Laser zum Erzeugen des gerichteten Strahls verwendet wird.

11. Verfahren nach Anspruch 10, **dadurch gekennzeichnet, daß** wenigstens drei intensitätsmodulierbare Laser (11, 12, 13) verwendet werden, die jeweils einen Einzelstrahl (11', 12', 13') im Bereich des sichtbaren Teils des elektromagnetischen spektrums in den Farben rot, grün bzw. blau emittieren, und daß der Strahl (30) aus einer Summe der Einzelstrahlen zusammengesetzt wird.

12. Verfahren nach Anspruch 11, **dadurch gekennzeichnet, daß** das Mischungsverhältnis der Einzelstrahlen (11', 12', 13') in Abhängigkeit von einer Absorptionscharakteristik des verwendeten Materials eingestellt wird.

13. Verfahren nach einem der Ansprüche 8 bis 12, **dadurch gekennzeichnet, daß** das Bild aus Bildpunkten zusammengesetzt wird.

14. Verfahren nach Anspruch 13, **dadurch gekennzeichnet, daß** die Intensität des Strahles bildpunktweise gesteuert wird.

15. Verfahren nach Anspruch 14, **dadurch gekennzeichnet, daß** ein Intensitätsprofil des Bildes gemessen wird und in Abhängigkeit von den Meßwerten die Intensität des Strahles gesteuert wird.

16. Verfahren nach einem der Ansprüche 8 bis 15, **dadurch gekennzeichnet, daß** die Strukturauflösung des herzustellenden Objekts durch die Auflösung der Videodaten eingestellt wird.

## Claims

1. Apparatus for producing a three-dimensional object by successive solidification of layers of a material, which can be solidified by means of electromagnetic radiation or particle radiation, at the locations which correspond to the cross section of the object (4) in the respective layer,
having an exposure device (11, 12, 13) for generating a directional beam of the electromagnetic radiation or the particle radiation, which beam impinges on an area of the respective layer that is to be irradiated, the exposure device comprising at least one laser (11, 12, 13),
and a deflection device (31, 32) for deflecting the directional beam of the electromagnetic radiation or the particle radiation at the locations which correspond to the object in each layer in a raster mode,
**characterized in that**
the deflection device (31, 32) is designed such that it deflects the directional beam, in a manner dependent on video data corresponding to an image of the cross section of the object in the respective layer, in such a way that an image of the cross section of the object which is stationary to a human eye is projected by the beam on the area to be irradiated.

2. Apparatus according to Claim 1, **characterized in that** the deflection device (31, 32) is designed such that the beam is deflected in a raster mode with a line frequency corresponding to a customary video standard.

3. Apparatus according to Claim 1, **characterized in that** the laser is a UV laser.

4. Apparatus according to Claim 1 or 2, **characterized in that** the exposure device comprises at least three intensity-modulatable lasers (11, 12, 13), which emit individual beams (11', 12', 13') in the visible spectrum of the electromagnetic radiation in the colours red, green and blue, respectively, and **in that** a device for generating a total beam (30) from the individual beams is provided.

5. Apparatus according to Claim 3, **characterized in that** the exposure device additionally comprises a UV laser, and **in that** a changeover device is provided for changing over the exposure device from an operation in which the irradiation is effected by means of the UV laser and an operation in which the irradiation is effected by means of the total beam comprising the individual beams.

6. Apparatus according to one of Claims 1 to 5, **characterized by** a container (1) for receiving a material (7), which can be solidified by means of electromagnetic radiation, and a structural platform (5) for receiving the object to be formed, which structural platform is arranged in a vertically moveable manner in the container.

7. Apparatus according to one of Claims 1 to 6, **characterized in that** the image is composed of pixels, and **in that** a device (60) for pixel-by-pixel control of the intensity of the beam is provided.

8. Method for producing a three-dimensional object by layer-by-layer solidification of a material (7), which can be solidified under the action of electromagnetic radiation or particle radiation, at the locations which correspond to the cross section of the object (4) in the layer, the material (7) being implemented in each layer, at the locations which correspond to the cross section of the object (4), by irradiation with a directional beam (30) of the electromagnetic or particle radiation, the beam being deflected over the layer in a raster mode, a laser beam being used as the beam and a light-curable plastic being used as the material,
**characterized in that**, in a manner dependent on video data corresponding to an image of the cross section of the object in the respective layer, the directional beam is deflected in such a way that an image of the cross section of the object which is stationary to a human eye is projected by the beam on the area to be irradiated.

9. Method according to Claim 8, **characterized in that** the beam is deflected in a raster mode with a line frequency corresponding to a customary video standard.

10. Method according to Claim 8, **characterized in that** a UV laser is used to generate the directional beam.

11. Method according to Claim 10, **characterized in that** at least three intensity-modulatable lasers (11, 12, 13) are used, which in each case emit an individual beam (11', 12', 13') in the region of the visible part of the electromagnetic spectrum in the colours red, green and blue, respectively, and **in that** the beam (30) is composed of a sum of the individual beams.

12. Method according to Claim 11, **characterized in that** the mixing ratio of the individual beams (11', 12', 13') is set in a manner dependent on an absorption characteristic of the material used.

13. Method according to one of Claims 8 to 12, **characterized in that** the image is composed of pixels.

14. Method according to Claim 13, **characterized in that** the intensity of the beam is controlled pixel by pixel.

15. Method according to Claim 14, **characterized in that** an intensity profile of the image is measured and the intensity of the beam is controlled in a manner dependent on the measured values.

16. Method according to one of Claims 8 to 15, **characterized in that** the structural resolution of the object to be produced is set by the resolution of the video data.

## Revendications

1. Dispositif pour fabriquer un objet tridimensionnel par durcissements successifs de couches d'un matériau susceptible de durcir au moyen de rayonnement électromagnétique ou de rayonnement de particules aux emplacements correspondants à la section transversale de l'objet (4) dans la couche concernée, avec un organe d'éclairage (11, 12, 13) pour créer un faisceau dirigé du rayonnement électromagnétique ou du rayonnement de particules, qui est incident sur une surface à irradier de la couche correspondante, l'organe d'éclairement comportant au moins un laser (11, 12, 13) et un organe de déviation (31, 32) pour dévier le faisceau dirigé du rayonnement électromagnétique ou du rayonnement de particules sur les emplacements correspondants de l'objet dans chaque couche selon un mode de balayage, **caractérisé en ce que** l'organe de déviation (31, 32) est réalisé de sorte qu'il dévie le faisceau dirigé en fonction de données vidéo qui correspondent à une image de la section transversale de l'objet dans la couche correspondante, de manière que sur la surface à irradier par le faisceau, soit projetée une image fixe pour l'oeil humain de la section transversale de l'objet.

2. Dispositif selon la revendication 1, **caractérisé en ce que** l'organe de déviation (31, 32) est réalisé de sorte que le faisceau soit dévié dans un mode de balayage avec une fréquence de ligne correspondant à une norme vidéo usuelle.

3. Dispositif selon la revendication 1, **caractérisé en ce que** le laser est un laser à rayonnements ultraviolets.

4. Dispositif selon la revendication 1 ou 2, **caractérisé en ce que** l'organe d'éclairage comprend au moins trois lasers (11, 12, 13) modulables en intensité, les faisceaux individuels (11', 12', 13') émettant dans le spectre visible du rayonnement électromagnétique dans les couleurs rouge, verte ou bleue, et **en ce qu'**est prévu un organe pour créer un faisceau rassemblé (30) à partir des faisceaux individuels.

5. Dispositif selon la revendication 3, **caractérisé en ce que** l'organe d'éclairage comprend en outre un laser à ultraviolets et **en ce qu'**est prévu un organe de commutation pour commuter l'organe d'éclairage d'un fonctionnement dans lequel l'irradiation est réalisée avec le laser à ultraviolets à un fonctionnement dans lequel l'irradiation est réalisée avec le faisceau rassemblé à partir des faisceaux individuels.

6. Dispositif selon l'une des revendications 1 à 5, **caractérisé par** un récipient (1) pour recevoir un matériau (7) susceptible de durcir au moyen de rayonnement électromagnétique et par une plate-forme (5) de construction disposée dans le récipient en étant susceptible de se déplacer en hauteur pour recevoir l'objet à former.

7. Dispositif selon l'une des revendications 1 à 6, **caractérisé en ce que** l'image est constituée de l'assemblage de points d'image et **en ce qu'**est prévu un organe (60) pour la commande de l'intensité du faisceau par point d'image.

8. Procédé de fabrication d'un objet tridimensionnel par durcissement par couche d'un matériau (7) susceptible de durcir sous l'effet de rayonnement électromagnétique ou de rayonnement de particules aux emplacements correspondants à la section transversale de l'objet (4) dans la couche, le matériau (7) dans chaque couche aux emplacements correspondant à la section transversale de l'objet (4) étant réalisés par irradiation avec un faisceau dirigé du rayonnement électromagnétique ou de particules, dans lequel le procédé le faisceau est dévié sur la couche selon un mode de balayage et on utilise comme faisceau un faisceau laser et comme matériau une matière plastique susceptible de durcir à la lumière, **caractérisé en ce qu'**en fonction de données vidéo qui correspondent à une image de la section transversale de l'objet dans la couche correspondante, le faisceau dirigé est dévié de sorte que soit projetée par le faisceau sur la surface à irradier une image fixe pour un oeil humain de la section transversale de l'objet.

9. Procédé selon la revendication 8, **caractérisé en ce que** le faisceau est dévié selon un mode de balayage à unc fréquence de ligne correspondant à une norme vidéo usuelle.

10. Procédé selon la revendication 8, **caractérisé en ce qu'**on utilise un laser ultraviolet pour créer le faisceau dirigé.

11. Procédé selon la revendication 10, **caractérisé en ce qu'**on utilise au moins trois lasers modulables en intensité (11, 12, 13), qui émettent chacun un faisceau distinct (11', 12', 13') dans la zone de la partie visible du spectre électromagnétique dans les couleurs rouge, verte ou bleue, et **en ce que** le faisceau (30) est constitué de l'assemblage d'une somme des faisceaux individuels.

12. Procédé selon la revendication 11, **caractérisé en ce que** le rapport de mélange des faisceaux individuels (11', 12', 13') est réglé en fonction d'une caractéristique d'absorption du matériau utilisé.

13. Procédé selon l'une des revendications 8 à 12, **caractérisé en ce que** l'image est constituée de l'assemblage de points d'image.

14. Procédé selon la revendication 13, **caractérisé en ce que** l'intensité du faisceau est commandée par point d'image.

15. Procédé selon la revendication 14, **caractérisé en ce qu'**un profil d'intensité de l'image est mesurée et l'intensité du faisceau est commandée en fonction des valeurs de mesure.

16. Procédé selon l'une des revendications 8 à 15, **caractérisé en ce que** la résolution de structure de l'objet à fabriquer est réglée par la résolution des données vidéo.
